# EUROPÄISCHE PATENTSCHRIFT

(11) **EP 2 844 372 B1**
(45) Veröffentlichungstag und Bekanntmachung des Hinweises auf die Patenterteilung: **29.06.2016**
(21) Anmeldenummer: 13726448.7
(22) Anmeldetag: 21.05.2013
(51) Int. Cl.: B01D 53/86

(54) **ABGASREINIGUNGSVORRICHTUNG UND VERFAHREN ZUR REDUKTION VON STICKOXIDEN AUS EINEM ABGAS EINER FOSSIL BEFEUERTEN KRAFTWERKSANLAGE**
EXHAUST-GAS PURIFICATION DEVICE AND METHOD FOR THE REDUCTION OF NITROGEN OXIDES FROM AN EXHAUST GAS OF A FOSSIL-FIRED POWER PLANT
DISPOSITIF D'ÉPURATION DE GAZ DE COMBUSTION ET PROCÉDÉ DE RÉDUCTION DES OXYDES D'AZOTE ISSUS DES GAZ DE COMBUSTION D'UNE CENTRALE ÉLECTRIQUE FONCTIONNANT AVEC UN COMBUSTIBLE FOSSILE

(30) Priorität: 27.06.2012 DE 102012210997
(43) Veröffentlichungstag der Anmeldung: 11.03.2015
(73) Patentinhaber: Siemens Aktiengesellschaft, 80333 München (DE)
(72) Erfinder: HAMMER, Thomas, 91334 Hemhofen (DE); BRÜCKNER, Jan, 91080 Uttenreuth (DE)
(86) Internationale Anmeldenummer: PCT/EP2013/060386
(87) Internationale Veröffentlichungsnummer: WO 2014/000977

(56) Entgegenhaltungen:
- WO-A1-97/01387
- WO-A2-2006/025900
- JP-A- 2008 126 124
- US-A1- 2008 112 870

## Beschreibung

Durch die Verbrennung fossil befeuerter Brennstoffe in Kraftwerken entstehen je nach eingesetztem Brennstoff und Betriebsweise des Kraftwerks unterschiedliche Verbrennungsprodukte, die als Emission das Kraftwerk verlassen. Ein Teil der Emissionen wie z.B. Asche, Schwefeldioxid SO₂ oder Quecksilber Hg, hängen mit Verunreinigungen des Brennstoffs zusammen und können deshalb durch den Einsatz hochqualitativer, aber teurer Brennstoffe vermindert werden. Andere Emissionen, wie z.B. Kohlendioxid CO₂ oder Stickoxide NOₓ hängen jedoch mit generellen Brennstoffeigenschaften, eingesetzten Oxidationsmitteln oder Betriebsparametern des Verbrennungsprozesses zusammen und lassen sich deshalb nicht wesentlich durch die Qualität des eingesetzten Brennstoffs reduzieren. Dabei ist die Emission von Kohlendioxid CO₂ prinzipiell bedingt durch den Einsatz kohlenstoffhaltiger Brennstoffe. Zudem ist gerade bei Gasturbinen die Qualität der verwendbaren Brennstoffe in der Regel genau definiert.

Auch Stickoxidemissionen NOₓ sind eine Folge der Betriebsparameter des Verbrennungsprozesses, sind aber prinzipiell bedingt durch den Einsatz von Luft als Oxidationsmittel, die zu fast 80 % aus Stickstoff N besteht. Gerade die Stickoxidemissionen sind wegen ihres Potentials für die Bildung von saurem Regen und von Sommersmog Gegenstand von sich schrittweise verschärfenden gesetzlichen Grenzwerten, die bei Neuanlagen durch optimierte Verbrennungsverfahren teilweise erreicht sind, bei bestehenden Anlagen aber eine Nachbehandlung der Rauchgase erfordern.

NOₓ bezeichnet hier das primär bei der Verbrennung entstehende Stickstoffmonoxid NO zusammen mit dem Stickstoffdioxid NO₂, zu dem das NO durch langsam ablaufende Reaktionen in Luft oxidiert wird.

Erhöhte Stickoxidemissionen NOₓ sind dabei bevorzugt bei hohen Verbrennungstemperaturen und langen Gasverweilzeiten bei hohen Temperaturen zu finden, während hohe Kohlendioxidemissionen CO₂ u. a. bei sehr magerer Verbrennung mit unzureichender Gasverweilzeit bei Bedingungen für vollständige Oxidation des Brennstoffs auftreten, die dann oft mit einem Wirkungsgradverlust gegenüber optimaler Verbrennung einhergehen.

Bestehende Kraftwerke werden zur Minderung der Stickoxidemissionen NOₓ u. a. zur Durchführung der selektiven katalytischen Reduktion (SCR) der Stickoxide NOₓ mit Ammoniak NH₃ als Reduktionsmittel ausgerüstet, die darauf ausgelegt sind, dass prozessbedingt weit über 90 % der Stickoxide NOₓ als Stickstoffmonoxid NO anfällt. Als Katalysatoren kommen typischerweise TiO₂N₂OF₁O₃-Gemische mit unterschiedlichen Mischungsverhältnissen zum Einsatz, die Ammoniak NH₃ selektiv absorbieren und Stickstoffmonoxid NO in einer katalytischen Oberflächenreduktion reduzieren gemäß der Bruttoreaktionsgleichung:

4 NO + 4 NH₃ + O₂ → 4 N₂ + 6 H₂O (a)

In einem Temperaturbereich von 250 °C bis 450 °C läuft diese Reaktion erfolgreich ab. Unterhalb von 250 °C wird die Reaktion, wegen der zu ihrer Aktivierung erforderlichen Energie, sehr schnell langsamer. Oberhalb von 450 °C setzt die katalytische Oxidation von NH₃ zuerst zu N₂O und schließlich zu NO ein.

Deshalb wurde in der EP 0 753 701 B1 für den Einsatz in Heizkesseln z.B. vorgeschlagen, zur Stickoxidminderung in einem Dampferzeuger zwischen einem Hochtemperaturvorwärmer und einem Niedertemperaturvorwärmer eine Einrichtung anzuordnen, um den passenden Temperaturbereich für die Stickoxidminderung zu treffen. Eine solche Anordnung vergrößert das Bauvolumen eines Heizkessels allerdings erheblich, weil einerseits Oberflächen für den Wärmetauscher und andererseits Oberflächen oder Volumina für die NOₓ-Reduktion bereitgestellt werden müssen. Dabei ist es unerheblich, ob die Reduktion katalytisch oder nicht katalytisch erfolgt. Im Falle einer katalytischen Reduktion müssen große Oberflächen bereitgestellt werden, auf denen gemäß der Gleichung (a), eine schnelle Reduktion erfolgt. Im Falle einer nicht katalytischen Reduktion erfolgt in einem vergleichsweise engen Temperaturintervall auf vergleichsweise deutlich höherem Temperaturniveau, eine Reihe von langsamen Volumenreduktionen, die gegenüber der katalytischen Reduktion zudem den Nachteil einer deutlich niedrigeren Selektivität und des hohen Risikos der Bildung von NO₂ als Nebenprodukt haben. NO₂ ist ein nur langsam abbaubares Treibhausgas, das ungefähr das 40-fache Treibhauspotential von CO₂ hat.

In der EP 1 820 560 A1 wurde vorgeschlagen, die durch Wärmetauscher eines Heizkessels oder eines Abhitzedampferzeugers einer Gasturbine bereitgestellten Oberflächen durch katalytische Beschichtung für die Rauchgasreinigung, insbesondere für die selektive katalytische Reduktion von Stickoxiden und die Oxidation von Kohlenmonoxid CO nutzbar zu machen. Eine genauere Studie dieses Vorschlags ergibt allerdings, dass im Falle eines Abhitzedampferzeugers die bei Temperturniveaus zwischen 250 °C und 450 °C bereitgestellten Flächen, selbst bei Beschichtung mit hochaktiven nanopartikulären Katalysatoren nicht für eine dauerhafte, zuverlässige Reduktion der Stickoxide von deutlich über 50 % ausreichen. Robuste Katalysatoren langer Lebensdauer haben im Vergleich zu den nanopartikulären Katalysatoren eine deutlich kleinere innere Oberfläche und damit geringere Aktivität und erlauben damit von vornherein nur Reduktionsgrade von 30 % oder weniger.

Die niedrigen Reduktionsgrade von robusten Katalysatoren mit langer Lebensdauer haben verschiedene Ursachen. Bei Pulverkatalysatoren liegt die aktive Oberfläche bei ca. 45 bis 60 m²/g. Bei der katalytischen Beschichtung metallischer Oberflächen von Wärmetauschern hingegen, ist mit wesentlich kleineren Werten der aktiven Oberfläche zu rechnen. Hinzu kommt, dass die katalytischen Reaktionen in diesem Fall durch Transportprozesse limitiert sind, so dass nur ein Bruchteil der aktiven katalytischen Oberflächen tatsächlich genutzt wird. Darüber hinaus liegt bei Abhitzedampferzeugern ein beträchtlicher Teil der Flächen auf einem Temperaturniveau von unter 250 °C.

Aus dem Bereich der Abgasreinigung für Verbrennungsmotoren, insbesondere Dieselmotoren, ist aus der WO 99/39809 und der EP 1 147 801 A1 bekannt, dass eine effizientere Reduktion von Stickoxiden NO erreicht werden kann, indem das Abgas zuerst einen Oxidationskatalysator passiert, der typischerweise 30 bis 70 % des NO zu NO₂ oxidiert, dann NH₃ als Reduktionsmittel zugesetzt wird und das mit Reduktionsmittel versetzte Abgas über einen SCR-Katalysator geleitet wird. Dieser auch als "schnelle SCR-Reaktion" bezeichnete Effekt läuft bei wesentlich niedrigeren Temperaturen ab, als die SCR-Reaktion. Jedoch oxidiert der Oxidationskatalysator aus thermodynamischen Gründen NO nur unterhalb einer Temperatur von 400 °C effizient zu NO₂.

Die JP 2008 126124A offenbart ein Verfahren und eine Vorrichtung zw Reduktion von NOₓ wobei das Abgas durch einen SCR katalysator, enien Pt-kaltigen Oxidationskatalysator und ein weiteren SCR Katalysator geführt wird. Ein Reduktionsmittel wird nur vor dem ersten SCR katalysator desiert.

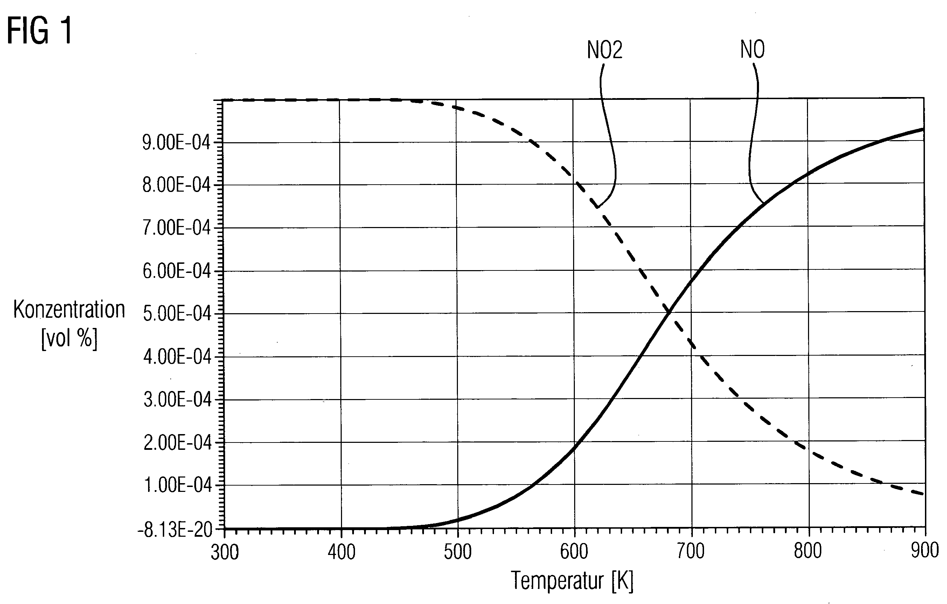

In FIG 1 ist eine thermodynamische Gleichgewichtsrechung von NO und NO₂ dargestellt. Die Konzentration in Volumenprozent ist über der Temperatur in Kelvin aufgetragen. Demnach sinkt der maximal erreichbare Konversionsgrad mit steigender Temperatur. Bei 400 °C liegt dieser bereits bei unter 50 %; bei 450 °C bei unter 40 %. Der thermodynamische Grenzwert lässt sich nur mit sehr großen Reaktoren erreichen und ist damit für die Praxis nicht realistisch. Aufgrund begrenzter Reaktionsraten ist in einem kompakten Reaktor mit einer auf typisch 70 % des thermodynamischen Grenzwerts reduzierten Konversion zu rechnen.

Bei kombinierten Gas- und Dampfkraftwerken (GuD) liegt die Gaseintrittstemperatur bei den Abhitzedampferzeugern zwischen 450 °C und 500 °C. Damit wäre der Nutzen der schnellen SCR-Reaktion für die Minderung der NOₓ-Emissionen relativ gering, da das NO₂ bereits bei relativ hohen Temperaturen vollständig verbraucht würde und bei niedrigeren Temperaturen, wo es den höchsten Nutzen brächte, nicht mehr zur Verfügung stünde.

Aufgabe der Erfindung ist es, ein Verfahren anzugeben, durch welches Stickoxidgehalt NOₓ eines Abgases eines Verbrennungsprozesses schnell, mit hohem Wirkungsgrad und auf kleinem Bauraum erreicht wird. Zudem ist es Aufgabe der Erfindung eine katalytische Abgasreinigungsvorrichtung vorzuschlagen, durch die eine Reduktion von Stickoxiden NOₓ aus einem Abgas einer fossil befeuerten Kraftwerksanlage mit hohem Wirkungsgrad und auf kleinem Bauraum erreichbar ist.

Die auf ein Verfahren zur Reduktion von Stickoxiden NOₓ gerichtete Aufgabe wird erfindungsgemäß gelöst durch die Merkmale des Anspruchs 1.

Die Reduktion von Stickoxiden NOₓ erfolgt dabei dreistufig in nacheinander ablaufenden Reaktionsprozessen. In einem ersten Reaktionsprozess wird das Abgas und ein erstes Reduktionsmittel zugeführt, wobei bei einer ersten Reaktionstemperatur ein Teil der im Abgas enthaltenen Stickoxide NOₓ durch selektive katalytische Reduktion zu Wasser H₂O und Stickstoff N₂ reduziert wird, wobei ein im Stickoxidgehalt NOₓ reduziertes Abgas gebildet wird. In einem zweiten Reaktionsprozess wird von dem im Stickoxidgehalt reduzierten Abgas ein Teil des darin enthaltenen Stickstoffmonoxids NO bei einer zweiten Reaktionstemperatur mit Sauerstoff O₂ zu Stickstoffdioxid NO₂ oxidiert, wobei ein Abgas mit einem Verhältnis von Stickstoffmonoxid NO zu Stickstoffdioxid NO₂ gebildet wird. In einem dritten Reaktionsprozess wird das Abgas und ein zweites Reduktionsmittel zugeführt, wobei bei einer dritten Reaktionstemperatur durch schnelle selektive katalytische Reduktion Stickstoffmonoxid NO und Stickstoffdioxid NO₂ mit dem zweiten Reduktionsmittel zu Wasser H₂O und Stickstoff N₂ reduziert wird, wobei ein im Wesentlichen von Stickoxiden NOₓ befreites Abgas gebildet wird.

Die Erfindung geht dabei insbesondere von der Überlegung aus, den Prozess der schnellen katalytischen Reduktion derart mit dem Prozess der konventionellen selektiven katalytischen Reduktion zu kombinieren, dass beide Prozesse jeweils in ihrem optimalen Betriebsbereich ablaufen, und dass dadurch ein maximaler Konversionsgrad erreichbar ist. Durch die Nutzung der schnellen katalytischen Reduktion wird der Wirkungsgrad der NOₓ-Reduktion im Niedertemperaturbereich eines Dampferzeugers erhöht und große, bereits vorhandene Flächen des Dampferzeugers zusätzlich einer Nutzung für den konventionellen Prozess der selektiven katalytischen Reduktion zugänglich gemacht. Dabei wird durch den mehrstufigen Prozess vermieden, dass Reduktionsmittel in größeren Mengen oxidiert wird. Da zur Erzielung der gleichen NOₓ-Reduktion weniger Reduktionsmittel zugegeben werden muss, lassen sich dadurch auch die Verfahrenskosten reduzieren.

Zum anderen wird NH₃ auf den meisten Oxidationskatalysatoren nicht nur zu N₂ oxidiert sondern häufig zu N₂O, NO und im Extremfall zu NO₂. Eine Anordnung, bei der reduktionsmittelhaltiges Rauchgas über den Oxidationskatalysator geleitet würde, wäre deshalb mit massiven Nachteilen verbunden.

Ein weiterer Vorteil des hier angegebenen Verfahrens im Vergleich zum reinen, konventionellen SCR-Verfahren liegt darin, dass es zu wesentlich niedrigeren CO-Emissionen führt. Klassische SCR-Katalysatoren, wie das oben genannte TiO₂V₂O₅WO₃ reduzieren zwar Emissionen unverbrannter Kohlenwasserstoffe, oxidieren diese aber nur unvollständig, so dass die CO-Emission fallweise sogar ansteigen kann.

In dem erfindungsgemäßen Verfahren hingegen sorgt der Oxidationskatalysator dafür, dass CO und ggf. noch vorhandene unverbrannte Kohlenwasserstoffe zu CO₂ oxidiert werden. Durch die vorliegende Erfindung wird der in katalytisch beschichteten, mehrstufigen Dampferzeugern erzielbare Wirkungsgrad NOₓReduktion ohne Bereitstellung zusätzlicher, für die Dampferzeugung eigentlich nicht benötigter Flächen so erhöht, dass eine zusätzliche Rauchgasnachbehandlung nicht mehr erforderlich ist.

Vorteilhafterweise wird die erste Reaktionstemperatur auf eine Temperatur zwischen 250 °C und 450 °C eingestellt, die dritte Reaktionstemperatur auf eine Temperatur zwischen 80 °C und 250 °C eingestellt, und die zweite Reaktionstemperatur auf eine Temperatur zwischen der ersten und der zweiten Reaktionstemperatur eingestellt.

Die Einstellung der Reaktionstemperaturen kann dabei indirekt über den vorgeschalteten Verbrennungsprozess erfolgen. Der Temperaturbereich der ersten Reaktionstemperatur entspricht dabei einer für die konventionelle SCR optimalen Temperatur. Der Temperaturbereich der zweiten Reaktionstemperatur liegt zwischen der ersten Reaktionstemperatur und der zweiten Reaktionstemperatur, also zwischen 80 °C und 450 °C, und liegt damit im optimalen Bereich für eine Oxidationsreaktion. Damit ist die Anwendung des erfindungsgemäßen Verfahrens zur Reduktion von Stickoxiden NOₓ auch für den einer Gasturbine in einem GUD-Kraftwerk folgenden Abhitzedampferzeuger mit Gaseintrittstemperaturen zwischen 450 °C und 500 °C anwendbar.

In einer vorteilhaften Weiterbildung des Verfahrens wird das dem Abgas zugeführte erste Reduktionsmittel durch einen ersten Regelprozess dosiert, so dass im ersten Katalyseprozess im zeitlichen Mittel ein vollständiger Umsatz des ersten Reduktionsmittels erzielt wird. Dazu wird bei dem ersten Regelprozess bei einem ersten Messvorgang, der vor dem ersten Katalyseprozess liegt, der Abgasmassenstrom Q_{Ag1}, die Stickstoffmonoxid NO-Konzentration C₁ und die Abgastemperatur T₄ erfasst, und anhand eines Kennfeldes zur Stickstoffmonoxidreduktion, als Funktion der Temperatur, einer Beladung an Ammoniak NH₃ des ersten Katalyseprozesses und der Stickstoffmonoxid(NO)-Konzentration C₁, eine zu erwartende Konzentration C₂ an Stickstoffmonoxid NO nach dem ersten Katalyseprozess ermittelt.

Bei einem nachgeschalteten zweiten Messvorgang, der zwischen dem ersten Katalyseprozess und dem zweiten Katalyseprozess liegt, wird die Stickstoffmonoxid(NO)-Konzentration C₃ erfasst. Im Anschluss an den zweiten Messvorgang wird die berechnete Konzentration C₂ mit der gemessenen Konzentration C₃ verglichen und die Zuführung des ersten Reduktionsmittels verringert, sobald die berechnete Konzentration C₂ niedriger wird als die gemessene Konzentration C₃.

Vorteilhafterweise wird der zweite Katalyseprozess derart gesteuert, dass ein weitgehend ausgewogenes Verhältnis von Stickstoffmonoxid NO zu Stickstoffdioxid NO₂ erzielt wird. Ein solches ausgewogenes Verhältnis, bei dem die Mol-Konzentrationen von NO und NO₂ ungefähr gleich groß sind, ist die optimale Ausgangslage zur Durchführung der schnellen SCR.

In einer besonderen Weiterbildung des Verfahrens wird das dem Abgas zugeführte zweite Reduktionsmittel durch einen zweiten Regelprozess dosiert, so dass im dritten Katalyseprozess im zeitlichen Mittel ein vollständiger Umsatz des zweiten Reduktionsmittels erzielt wird. Dabei wird bei dem zweiten Regelprozess bei dem zweiten Messvorgang die Abgastemperatur T₅ und der Abgasmassenstrom Q_{Ag2} erfasst, und anhand eines Kennfeldes des zweiten Katalyseprozesses die Konzentration C₄ an Stickstoffdioxid NO₂ und ein im dritten Katalyseprozess erzielbarer Reduktionsgrad G ermittelt.

Bei einem nachfolgenden dritten Messvorgang der nach dem dritten Katalyseprozess erfolgt, wird die Abgastemperatur T₅ und die Stickstoffdioxid(NO₂)-Konzentration erfasst. Danach wird die berechnete Konzentration C₄ mit der gemessenen Konzentration C₅ verglichen, und die Zuführung des zweiten Reduktionsmittels anhand des erzielbaren Reduktionsgrades G eingestellt und verringert, sobald die berechnete Konzentration C₄ niedriger wird als die gemessene Konzentration C₅.

Überschreitet die Differenz zwischen berechneter und gemessener NO-Konzentration eine bestimmte Schwelle, dann ist eine ordnungsgemäße Funktion des Katalysators nicht mehr gewährleistet, so dass eine Wartung erforderlich wird. Dem kann durch Definition einer geeigneten Schwelle sowie Ausgabe einer Warnmeldung in einem Kontrollsystem vorgebeugt werden.

In einer zweckmäßigen Weiterbildung des Verfahrens wird als erstes Reduktionsmittel und als zweites Reduktionsmittel Ammoniak NH₃ oder eine Ammoniak abspaltende Substanz verwendet. Als Ammoniak abspaltende Substanz wird dabei vorzugsweise Harnstoff verwendet.

Vorteilhafterweise kommt das Verfahren bei einer fossil befeuerten Kraftwerksanlage zur Anwendung. Diese kann beispielsweise eine GUD-Kraftwerksanlage oder eine Dampfkraftwerksanlage mit einem fossil befeuerten Kessel sein.

Die auf eine katalytische Abgasreinigungseinrichtung gerichtete Aufgabe wird erfindungsgemäß gelöst durch die Merkmale des Anspruchs 10. Die Vorrichtung zur Reduktion von Stickoxiden aus einem Abgas einer fossil befeuerten Kraftwerksanlage weist einen sich entlang einer Strömungsrichtung erstreckenden Heizgaskanal und einen in dem Heizgaskanal angeordneten Reaktorraum auf. In dem Reaktorraum befindet sich ein erster Reduktionsreaktor zum Reduzieren von Stickoxiden NOₓ zu Wasser H₂O und Stickstoff N₂ wobei von dem ersten Reduktions reaktor eine erste Ein düse ein richtung angeordnet ist. Dem ersten Reduktionsreaktor ist in Strömungsrichtung ein Oxidationsreaktor zum Oxidieren von Stickstoffmonoxid NO zu Stickstoffdioxid NO₂ nachgeschaltet. Dem Oxidationsreaktor wiederum ist ein zweiter Reduktionsreaktor zum Reduzieren von Stickoxiden NOₓ zu Wasser H₂O und Stickstoff N₂ in Strömungsrichtung nachgeschaltet wobei vor dem zweiten Reduktions reaktor eine zweite Eindüseeinrichtung angeordnet ist.

In einer besonderen Weiterbildung der katalytischen Abgasreinigungseinrichtung umfasst der erste Reduktionsreaktor Heizflächen, die zumindest an einem Teil eine erste katalytische Beschichtung aufweisen, wobei die katalytische Beschichtung selektiv für Stickoxide NOₓ ist, und bis zu einer Temperatur von 500 °C stabil ist. Für die erste katalytische Beschichtung kommen konventionelle SCR-Katalysatoren, wie z.B. TiO₂/V₂/O₅/WO₃ oder Ionen-ausgetauschte Zeolithe, die durch Aufschlämmen, Trocknen und ggf. Kalzinieren auf die Oberfläche aufgebracht, fixiert und aktiviert werden.

In einer weiteren besonderen Weiterentwicklung der katalytischen Abgasreinigungseinrichtung umfasst der Oxidationsreaktor Heizflächen, die zumindest an einem Teil eine zweite katalytische Beschichtung aufweisen, wobei die katalytische Beschichtung selektiv für Stickoxide NOₓ ist, und bis zu einer Temperatur von 300 °C stabil ist. Dabei handelt es sich bevorzugt um einen edelmetallhaltigen Katalysator, wie z.B. Platin mit Aluminiumoxid (Pt-Al₂O₃) oder einen Ammonium-Ionen-ausgetauschten ZSM5-Zeolithen (Pt-NH₄ZSM5) als Trägermaterial.

Der zweite Reduktionsreaktor umfasst vorzugsweise Heizflächen, die zumindest an einem Teil eine dritte katalytische Beschichtung aufweisen, wobei die katalytische Beschichtung selektiv für Stickoxide NOₓ ist, und bis zu einer Temperatur von 250 °C stabil ist.

In einer vorteilhaften Weiterbildung der katalytischen Abgasreinigungseinrichtung sind die erste katalytische Beschichtung und die dritte katalytische Beschichtung SCR-Katalysatorschichten, die Dicken von größer 10 µm und kleiner 50 µm aufweisen, so dass eine Reduktionsreaktion von Stickoxiden NOₓ mit Ammoniak NH₂ zu Wasser H₂O und Stickstoff N₂ durchführbar ist. Durch die geringe Dicke der Katalysatorschichten ist der Wärmeübergang an den Oberflächen der Wärmetauscher nicht wesentlich behindert. Dünnere Schichten würden zu einer Minderung der katalytischen Aktivität und kurzer Lebensdauer führen, dickere Schichten würden wegen der Porosität und der damit verbundenen niedrigeren Wärmeleitfähigkeit den Wärmeübergang beeinträchtigen.

In einer besonderen Weiterbildung der katalytischen Abgasreinigungseinrichtung ist die zweite katalytische Beschichtung eine edelmetallhaltige Beschichtung, die eine Dicke von größer 10 µm und kleiner 50 µm aufweist, und deren geometrische Oberfläche kleiner als 30 % der geometrischen Oberfläche der ersten katalytischen Beschichtung ist, so dass eine Oxidationsreaktion von Stickstoffmonoxid NO mit Sauerstoff O₂ zu Stickstoffdioxid NO₂ durchführbar ist. Aufgrund der hohen Aktivität edelmetallhaltiger Katalysatoren reicht für diese Stufe ein Bruchteil der geometrischen Oberfläche des Oxidationsreaktors aus.

In einer vorteilhaften Weiterbildung der katalytischen Abgasreinigungseinrichtung weist die erste Eindüseeinrichtung ein erstes Regelventil und die zweite Eindüseeinrichtung ein zweites Regelventil auf, wobei die Eindüseeinrichtungen jeweils aus einer Anzahl an Düsenköpfen bestehen, die über die Fläche der Reaktoren verteilt sind. Dabei weisen die Düsenöffnungen von den Reaktoren einen Abstand auf, so dass ein Reduktionsmittel über den Strömungsquerschnitt der Reaktoren gleichmäßig verteilt eindüsbar ist.

Dadurch wird erreicht, dass auch ohne zusätzliche Mischer bis zu den katalytischen beschichteten Wärmetauschern eine gleichmäßige Verteilung des Reduktionsmittels im Heißgas erfolgt. Dadurch kann der Druckverlust entlang der Strömung klein gehalten werden. Das Reduktionsmittel kann entweder gasförmiges NH₃ sein, so dass es sich bei den Injektoren um Gasinjektoren handelt, oder es kann sich um eine wässrige Lösung eines NH₃ freisetzenden Reduktionsmittels, wie z.B. Harnstoff, handeln, so dass es sich um Injektoren von Flüssigkeiten handelt. Durch ein Feld von Injektoren und ggf. damit verbundenen Mitteln, wie z.B. statische Mischer zur Durchmischung des Rauchgasstroms mit Reduktionsmittel wird für eine gleichmäßige Verteilung der Konzentration des Reduktionsmittels über den Strömungsquerschnitt gesorgt.

In einer weiteren vorteilhaften Ausgestaltung der katalytischen Abgasreinigungseinrichtung ist eine Regeleinrichtung vorgesehen, die eine erste Messeinheit und eine zweite Messeinheit umfasst, die mit einer ersten Auswerteeinheit signalleitend verbunden sind, und dass die Regeleinrichtung eine dritte Messeinheit umfasst, die mit einer zweiten Auswerteeinheit signalleitend verbunden ist, und dass die erste Auswerteeinheit mit dem ersten Regelventil signalleitend verbunden ist und die zweite Auswerteeinheit mit dem zweiten Regelventil signalleitend verbunden ist. Dadurch ist ein über das erste und zweite Regelventil zuführbares Reduktionsmittel gezielt dem ersten und dem zweiten Katalyseprozess zuführbar, so dass im Betrieb der katalytischen Abgasreinigungseinrichtung im zeitlichen Mittel ein vollständiger Umsatz des Reduktionsmittels erzielt ist. Die Regeleinrichtung kann auch eine Mehrzahl an Messeinheiten und Regelventilen aufweisen.

Die katalytische Abgasreinigungseinrichtung kommt zweckmäßigerweise bei Heizflächen zum Einsatz, die Überhitzerheizflächen, Verdampferheizflächen oder Economizerheizflächen sind. Dabei ist die katalytische Abgasreinigungseinrichtung Bestandteil eines Abhitzedampferzeugers in einer fossil befeuerten Kraftwerksanlage.

Nachfolgend werden Ausführungsbeispiele der Erfindung anhand der beigefügten Zeichnungen näher erläutert. Es zeigen:
- FIG 1: ein chemisches Gleichgewicht zwischen NO und NO₂ in einem Rauchgas;
- FIG 2: ein Ausführungsbeispiel eines Verfahrens zur Reduktion von Stickoxiden NOₓ aus einem stickoxidhaltigem Abgas in Form eines Prozessschaltbildes;
- FIG 3: ein Ausführungsbeispiel zur Regelung eines Verfahrens zur Reduktion von Stickoxiden NOₓ aus einem stickoxidhaltigen Abgas in Form eines Ablaufschemas;
- FIG 4: einen Abhitzedampferzeuger mit einer katalytischen Abgasreinigungseinrichtung zur Reduktion von Stickoxiden aus einem Abgas einer fossil befeuerten Kraftwerksanlage.

FIG 1 zeigt eine thermodynamische Gleichgewichtsrechnung von NO und NO₂. Die Konzentration in Volumenprozent ist über der Temperatur in Calvin aufgetragen. Der maximal erreichbare Konversionsgrad sinkt mit steigender Temperatur.

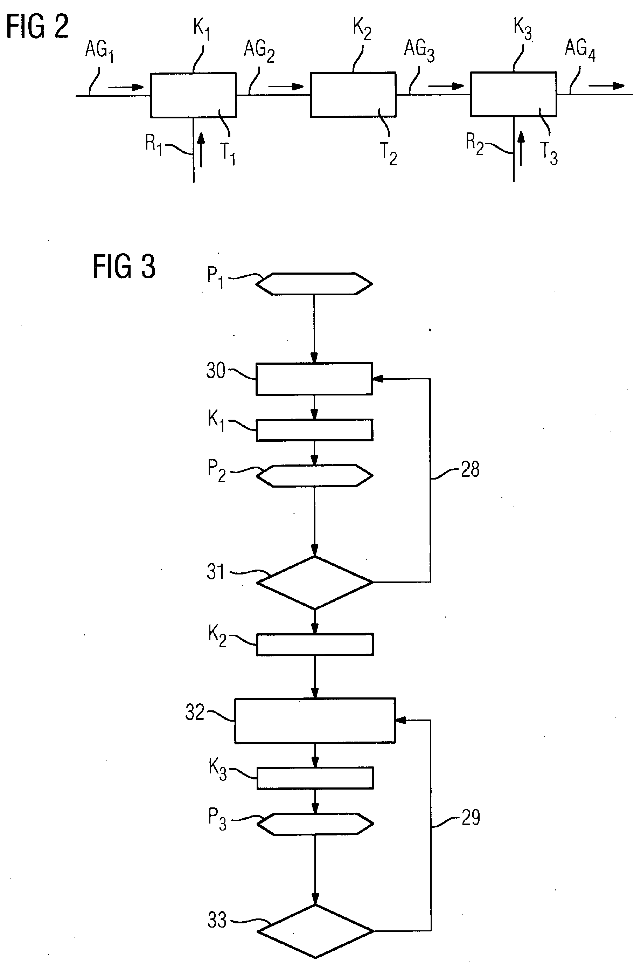

Das in FIG 2 dargestellte Prozessschaltbild zeigt eine vereinfachte Darstellung des erfindungsgemäßen Verfahrens in Form der drei Reaktionsprozesse K1, K2 und K3.

Dem ersten Reaktionsprozess K1 wird ein Abgas AG1 und ein Reduktionsmittel R1 zugeführt. Als Reduktionsmittel kommt gasförmiger Ammoniak NH₃ oder eine wässrige Lösung eines Ammoniak NH₃ freisetzenden Reduktionsmittels, wie z.B. Harnstoff, zum Einsatz. Bei einer Reaktionstemperatur T1, die zwischen 250 °C und 450 °C eingestellt wird, wird ein Teil der im Abgas enthaltenen Stickoxide durch selektive katalytische Reduktion zu Wasser H₂O und Stickstoff N₂ reduziert. Dabei wird ein im Stickoxidgehalt NOₓ reduziertes Abgas AG2 gebildet. Das im Stickoxidgehalt NOₓ reduzierte Abgas AG2 wird anschließend einem zweiten Reaktionsprozess K2 zugeführt. Im zweiten Reaktionsprozess K2 zugeführt.

Im zweiten Reaktionsprozess K2 wird ein Teil des im Abgas enthaltenen Stickstoffmonoxids NO mit Sauerstoff O₂ zu Stickstoffdioxid NO₂ oxidiert. Dabei wird ein Abgas AG3 mit einem Verhältnis von Stickmonoxid NO zu Stickstoffdioxid NO₂ gebildet.

Das Abgas AG3 wird zusammen mit einem Reduktionsmittel R2 einem dritten Reaktionsprozess K3 zugeführt. Bei einer Reaktionstemperatur T3, die auf eine Temperatur zwischen 80 °C und 250 °C eingestellt wird, wird durch schnelle selektive katalytische Reduktion Stickstoffmonoxid NO und Stickstoffdioxid NO₂ mit dem Reduktionsmittel R2 zu Wasser H₂O und Stickstoff N₂ reduziert. Dabei wird ein im Wesentlichen von Stickoxiden NOₓ reduziertes Abgas AG4 gebildet. Die Reaktionstemperatur T2 im zweiten Reaktionsprozess K2 wird dabei auf eine Temperatur zwischen der ersten Reaktionstemperatur T1 und der dritten Reaktionstemperatur T3 eingestellt.

In FIG 3 ist ein Ausführungsbeispiel zur Regelung eines Verfahrens zur Reduktion von Stickoxiden NOₓ aus einem stickoxidhaltigen Abgases einer Gasturbinenanlage in Form eines Ablaufschemas dargestellt.

Zunächst wird durch einen Messvorgang P1, der am Eintritt des Abhitzedampferzeugers 27 erfolgt, der Abgas- bzw. Rauchgasmassenstrom, die Stickoxidkonzentration NO und die Temperatur gemessen. Ausgehend von diesen Daten sowie von Betriebsdaten des Brenners der Gasturbine, wird in einem Auswerte- und Steuerprozess 30 die Menge an dem in den ersten Reaktionsprozess K1 einzubringenden Reduktionsmittel R1 berechnet und gesteuert. In dem Reaktionsprozess K1 wird das Reduktionsmittel R1 eingebracht. Nach dem ersten Reaktionsprozess K1 erfolgt ein zweiter Messvorgang P2.

Die Messdaten aus dem zweiten Messvorgang P2 werden einem ersten Steuerprozess 31 zugeführt. Der Steuerprozess 31 berechnet weiterhin die NO-Konzentration am Ausgang des ersten Reaktionsprozesses K1 bzw. am zweiten Messvorgang P2. Dazu wird ein Kennfeld zur Stickoxidreduktion NO als Funktion der Temperaturverteilung, der NH₃-Beladung des ersten Reaktionsprozesses und der NO-Konzentration des zugeführten Abgases herangezogen. Die berechnete NO-Konzentration wird dann mit der tatsächlich gemessenen verglichen. Ist die berechnete Konzentration niedriger als die gemessene, ist der Reduktionsmittelverbrauch geringer als in der Dosierung vorausgesetzt. Um Reduktionsmittelschlupf zu vermeiden, muss die Dosierung reduziert werden. Überschreitet die Differenz zwischen berechneter und gemessener NO-Konzentration eine bestimmte Schwelle, dann ist eine ordnungsgemäße Funktion des Katalysators nicht mehr gewährleistet, so dass eine Wartung, bzw. die Ausgabe einer Fehlermeldung erforderlich wird. Die Information, ob die Dosierung des Reduktionsmittels R1 zu reduzieren oder zu erhöhen ist, wird durch einen ersten Regelprozess 28 zurück an den ersten Auswerte- und Steuerprozess 30 übermittelt und durch diesen entsprechend ausgeregelt.

Nach dem ersten Steuerprozess 31 folgt der zweite Reaktionsprozess K2. Und nach dem zweiten Reaktionsprozess K2 ein zweiter Auswerte- und Regelprozess 32.

In dem zweiten Auswerte- und Regelprozess 32 wird die NO-Konzentration am Eingang des zweiten Reaktionsprozesses K2, die Temperaturverteilung und der Massenstrom wird dazu genutzt, um anhand eines Kennfelds des zweiten Reaktionsprozesses K2 die Konversion von NO zu NO₂ zu berechnen. Daraus resultiert, wie hoch der auf den dritten Reaktionsprozess K3 erzielbare Reduktionsgrad ist. In Abhängigkeit davon wird die Dosierung des Reduktionsmittels R2 nach dem zweiten Reaktionsprozess K2 eingestellt. Ein dritter Messvorgang P3 ermittelt die Temperatur und die NOₓ-Konzentration am Ausgang des dritten Reaktionsprozesses K3 und führt diese Daten einem zweiten Steuerprozess zu. Durch Vergleich des berechneten mit dem gemessenen Wert der NOₓ-Konzentration am Ausgang des dritten Reaktionsprozesses, bzw. am dritten Messvorgang berechnet der zweite Steuerprozess 33, ob die Dosierung des zweiten Reduktionsmittels R2 zu korrigieren ist. Die Information über eine mögliche Korrektur wird über einen zweiten Regelprozess 29 zurück an die zweite Auswerte- und Regelvorrichtung 32 übertragen. Auch hier wird für die Differenz zwischen berechneter und gemessener NOₓ-Konzentration eine Schwelle gesetzt, bei deren Überschreitung eine Warnung ausgegeben wird.

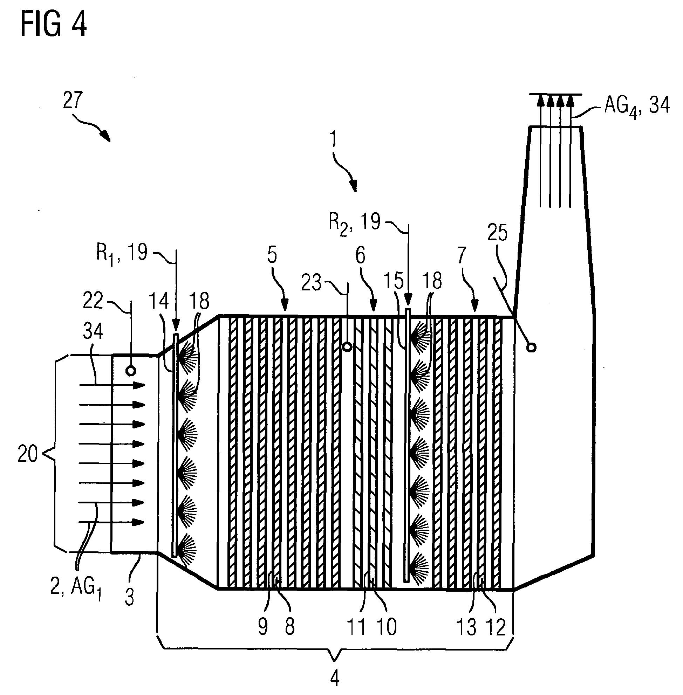

Der in FIG 4 dargestellte Abhitzedampferzeuger 27 wird in einem vertikalen Schnitt veranschaulicht. Der Abhitzedampferzeuger 27 umfasst eine katalytische Abgasreinigungseinrichtung 1 zur Reduktion von Stickoxiden und besteht im Wesentlichen aus dem Heizgaskanal 3 und dem Reaktorraum 4. Der hier gezeigte Abhitzedampferzeuger 27 kann dabei beispielsweise Bestandteil einer fossil befeuerten Kraftwerksanlage sein.

Über den Strömungsquerschnitt 20 wird ein Abgas 2, AG1, das beispielsweise aus einer Gasturbinenanlage stammt, in Strömungsrichtung 20 in den Heizgaskanal 3 des Abhitzedampferzeuger 27 eingeleitet. Nach Eintritt des Abgases 2, bzw. AG1 in den Heizgaskanal 3 werden mit einer ersten Messeinheit 22 mit Sensoren Temperatur und Konzentrationen von Schadstoffen, insbesondere NO, gemessen. Der Massenstrom des Abgases ist durch den geregelt ablaufenden Verbrennungsprozess der Gasturbinenanlage bestimmt und kann deshalb als bekannt vorausgesetzt werden. Aus dem Heizgaskanal 3 strömt das Abgas 2, AG1 in den Reaktorraum 4. Der Reaktorraum 4 besteht im Wesentlichen aus einem ersten Reduktionsreaktor 5, einem Oxidationsreaktor 6 und einem zweiten Reduktionsreaktor 7.

In den ersten Reduktionsreaktor 5 ist durch eine erste Eindüseeinrichtung 14 ein Reduktionsmittel 19 eindüsbar. Die erste Eindüseeinrichtung 14 weist dazu eine Anzahl an Düsenöffnungen 18 auf, durch die eine gleichmäßige Verteilung der Konzentration des Reduktionsmittels 19 über den Strömungsquerschnitt 20 des Abgases 2 erreicht ist. Das mit Reduktionsmittel 19 versetzte Abgas 2 strömt nun in den ersten Reduktionsreaktor 5.

In einer vorteilhaften, hier nicht dargestellten Ausgestaltung der Abgasreinigungseinrichtung 1 wird hingegen das Reduktionsmittel 19 so weit vor dem ersten Reduktionsreaktor 5 über den Strömungsquerschnitt des Abgases 2 verteilt injiziert, dass auch ohne zusätzliche Mischer oder Eindüseeinrichtüngen 14 bis zu den katalytisch beschichteten Wärmetauschern eine gleichmäßige Verteilung des Reduktionsmittels 19 im Abgas 2
erfolgt, weil dadurch der Druckverlust entlang der Strömung klein gehalten werden kann. Das Reduktionsmittel 19 kann entweder gasförmiges NH₃ sein, so dass es sich bei den Injektoren um Gasinjektoren handelt, oder es kann sich um eine wässrige Lösung eines NH₃ freisetzenden Reduktionsmittels wie z.B. Harnstoff handeln, so dass es sich um Injektoren für Flüssigkeiten handelt.

Der erste Reduktionsreaktor 5 besteht aus einer ersten Anordnung Wärmetauscherrohre mit Heizflächen 8, die eine erste katalytische Beschichtung 9 aufweisen. Für die katalytische Beschichtung der Heizflächen 8 kommen klassische SCR-Katalysatoren wie Ti0₂/V₂0/WO₃ oder Ionen-ausgetauschte Zeolithe in Frage. Nach dem ersten Reduktionsreaktor 5 ist eine zweite Messeinheit 23 angeordnet, die mit Sensoren Temperatur und Schadstoffkonzentrationen, insbesondere die Konzentration von NO, bestimmen.

Dem ersten Reduktionsreaktor 5 ist in Strömungsrichtung 34 des Abgases 2 der Oxidationsreaktor 6 nachgeschaltet. Der Oxidationsreaktor 6 besteht aus einer Anordnung Wärmetauscherrohre, die eine Heizfläche 10 mit einer zweiten katalytischen Beschichtung 11 aufweisen. Bei der zweiten katalytischen Beschichtung 11 handelt es sich bevorzugt um einen edelmetallhaltigen Katalysator wie z.B. Platin mit Aluminiumoxid oder einem Ammonium-Ionen ausgetauschten ZSM5-Zeolithen (PtNH₄ZSM5) als Trägermaterial handelt. Aufgrund der hohen Aktivität edelmetallhaltiger Katalysatoren reicht als zweite katalytische Beschichtung 11 ein Bruchteil der geometrischen Oberfläche (beispielsweise 10-20 %) der ersten katalytischen Beschichtung 9 des ersten Reduktionsreaktors 5.

Nach dem Oxidationsreaktor 5 ist eine zweite Eindüseeinrichtung 15 angeordnet, die ebenfalls wie die erste Eindüseeinrichtung 14 eine Anzahl von Düsenöffnungen 18 zur Einlösung eines Reduktionsmittels 19 aufweist. Die Anforderungen an die zweite Eindüseeinrichtung sind dabei gleich der ersten Eindüseeinrichtung 14. Das mit Reduktionsmittel 19 versetzte Abgas 2 strömt anschließend in Strömungsrichtung 34 in den zweiten Reduktionsreaktor 7. Der zweite Reduktionsreaktor 7 weist ebenfalls eine Anzahl an Wärmetauscherrohren auf, die auf ihren jeweiligen Heizflächen 12 eine dritte katalytische Beschichtung aufweisen.

In dem zweiten Reduktionsreaktor findet bevorzugt die schnelle SCR-Reaktion von NO und NO₂ mit NH₃ zu N₂ und H₂O bei beispielsweise einer Temperatur von 80 und 250°C statt.

Abschließend folgt der Abzug des Abgases 2, wobei die dritte Messeinheit mit einer Reihe weiterer Sensoren zur Messung von Temperatur und Schadstoffkonzentrationen angebracht ist. Den Abhitzedampferzeuger 27 verlässt in Strömungsrichtung 34 ein von Stickoxiden NOₓ gereinigtes Abgas 2.

Da der Oxidationsreaktor 6 und der zweite Reduktionsreaktor 7 bei relativ niedrigen Temperaturen betrieben werden kann, kommen hier für die Herstellung der ersten katalytischen Beschichtung 9 und der zweiten katalytischen Beschichtung auch empfindlichere Verfahren z.B. Beschichtung nach dem Sol-GelVerfahren in Frage, die den Vorteil höherer aktiver Oberfläche und damit höhere katalytische Reaktionsraten mit sich bringen, aber wegen der Gefahr des Sinterns nicht bei hohen Temperaturen eingesetzt werden können.

## Patentansprüche

1. Verfahren zur Reduktion von Stickoxiden NOₓ aus einem stickoxidhaltigen Abgas (AG₁) eines Verbrennungsprozesses, bei dem
a) in einem ersten Reaktionsprozess (K₁) das Abgas (AG₁) und ein Reduktionsmittel (R₁) zugeführt wird, wobei bei einer Reaktionstemperatur (T₁) ein Teil der im Abgas enthaltenen Stickoxide NOₓ durch selektive katalytische Reduktion zu Wasser H₂O und Stickstoff N₂ reduziert wird, wobei ein im Stickoxidgehalt NOₓ reduziertes Abgas (AG₂) gebildet wird,
b) in einem zweiten Reaktionsprozess (K₂) von im Stickoxidgehalt NOₓ reduzierten Abgas (AG₂) bei einer Reaktionstemperatur (T₂) ein Teil des enthaltenen Stickstoffmonoxid NO mit Sauerstoff O₂ zu Stickstoffdioxid NO₂ oxidiert wird, wobei ein Abgas (AG₃) mit einem Verhältnis (V) von Stickstoffmonoxid NO zu Stickstoffdioxid NO₂ gebildet wird,
c) in einem dritten Reaktionsprozess (K₃) das Abgas (AG₃) und ein Reduktionsmittel (R₂) zugeführt wird, wobei bei einer Reaktionstemperatur (T₃) durch schnelle selektive katalytische Reduktion Stickstoffmonoxid NO und Stickstoffdioxid NO₂ mit dem Reduktionsmittel (R₂) zu Wasser H₂O und Stickstoff N₂ reduziert wird, wobei ein im Wesentlichen von Stickoxiden NOₓ befreites Abgas (AG₄) gebildet wird.

2. Verfahren nach Anspruch 1, bei dem die Reaktionstemperatur (T₁) auf eine Temperatur zwischen 250 °C und 450 °C eingestellt wird, die Reaktionstemperatur (T₃) auf eine Temperatur zwischen 80 °C und 250 °C eingestellt wird, und die Reaktionstemperatur (T₂) auf eine Temperatur zwischen (T₁) und (T₂) eingestellt wird.

3. Verfahren nach Anspruch 1 oder 2, wobei das dem Abgas (AG₁) zugeführte Reduktionsmittel (R₁) durch einen ersten Regelprozess (28) dosiert wird, so dass im ersten Katalyseprozess (K₁) im zeitlichen Mittel ein vollständiger Umsatz des Reduktionsmittels (R₁) erzielt wird.

4. Verfahren nach Anspruch 3, wobei bei dem ersten Regelprozess (28)
a) bei einem ersten Messvorgang (P₁) vor dem ersten Katalyseprozess (K₁) der Abgasmassenstrom (Q_{AG1}), die Stickstoffmonoxid NO Konzentration (C₁) und die Abgastemperatur (T₄) erfasst wird, und anhand eines Kennfeldes zur Stickstoffmonoxid-Reduktion, als Funktion der Temperatur, einer Beladung an Ammoniak NH₃ des ersten Katalyseprozesses (K₁) und der Stickstoffmonoxid NO Konzentration (C₁), eine zu erwartende Konzentration (C₂) an Stickstoffmonoxid NO nach dem ersten Katalyseprozess (K₁) in einem ersten Auswerte- und Steuerprozess (30)ermittelt wird,
b) bei einem zweiten Messvorgang (P₂) zwischen dem ersten Katalyseprozess (K₁) und dem zweiten Katalyseprozess (K₂) die Stickstoffmonoxid NO Konzentration (C₃) erfasst wird,
c) die berechnete Konzentration (C₂) mit der gemessenen Konzentration (C₃) verglichen wird und wobei die Zuführung des ersten Reduktionsmittels (R₁) durch einen ersten Steuerprozess (31) verringert wird, sobald die berechnete Konzentration (C₂) niedriger wird als die gemessene Konzentration (C₃).

5. Verfahren nach einem der Ansprüche 1 bis 4, bei dem der zweite Katalyseprozess (K₂) derart gesteuert wird, so dass ein weitgehend ausgewogenes Verhältnis V ∼ 1 von Stickstoffmonoxid NO zu Stickstoffdioxid NO₂ erzielt wird.

6. Verfahren nach einem der Ansprüche 1 bis 5, wobei das dem Abgas (AG₃) zugeführte zweite Reduktionsmittel (R₂) durch einen zweiten Regelprozess (29) dosiert wird, so dass im dritten Katalyseprozess (K₃) im zeitlichen Mittel ein vollständiger Umsatz des Reduktionsmittels R₂ erzielt wird.

7. Verfahren nach Anspruch 6, wobei bei dem zweiten Regelprozess (29)
a) bei dem zweiten Messvorgang (P₂) vor dem zweiten Katalyseprozess (K₂) die Abgastemperatur (T₅) und der Abgasmassenstrom (Q_{AG2}) erfasst wird, und anhand eines Kennfeldes des Katalyseprozesses (K₂) die Konzentration (C₄) an Stickstoffdioxid NO₂ und ein im Katalyseprozess (K₃) erzielbarer Reduktionsgrad (G) in einem zweiten Auswerteund Regelprozess (32) ermittelt wird,
b) bei einem dritten Messvorgang (P₃) nach dem dritten Katalyseprozess (K₃) die Abgastemperatur (T₅) und die Stickstoffdioxid NO₂ Konzentration (C₅) erfasst wird,
c) die berechnete Konzentration (C₄) mit der gemessenen Konzentration (C₅) verglichen wird, und die Zuführung des zweiten Reduktionsmittels (R₂) durch einen zweiten Steuerprozess (33) anhand des erzielbaren Reduktionsgrades (G) eingestellt wird, und verringert wird, sobald die berechnete Konzentration (C₄) niedriger wird als die gemessene Konzentration (C₅).

8. Verfahren nach einem der Ansprüche 1 bis 7, bei dem als Reduktionsmittel (R₁, R₂) Ammoniak NH₃ oder eine ammoniakabspaltende Substanz verwendet wird.

9. Verfahren nach einem der vorangegangenen Ansprüche, **gekennzeichnet durch** eine Anwendung bei einer fossil befeuerten Kraftwerksanlage.

10. Katalytische Abgasreinigungseinrichtung (1) zur Reduktion von Stickoxiden aus einem Abgas (2) einer fossil befeuerten Kraftwerksanlage, mit einem sich entlang einer Strömungsrichtung (34) erstreckenden Heizgaskanal (3) und einem in dem Heizgaskanal (3) angeordneten Reaktorraum (4), **dadurch gekennzeichnet, dass** der Reaktorraum (4) einen ersten Reduktionsreaktor (5), zum reduzieren von Stickoxiden NOₓ zu Wasser H₂O und Stickstoff N₂ umfasst, wobei vor dem ersten Reduktionsreaktor (5) eine erste Eindüseeinrichtung (14) angeordnet ist, einen in Strömungsrichtung dem ersten Reduktionsreaktor (5) nachgeschalteten Oxidationsreaktor (6) zum oxidieren von Stickstoffmonoxid NO zu Stickstoffdioxid NO₂ umfasst, und einen in Strömungsrichtung dem Oxidationsreaktor (6) nachgeschalteten zweiten Reduktionsreaktor (7), zum reduzieren von Stickoxiden NOₓ zu Wasser H₂O und Stickstoff N₂ umfasst, wobei vor dem zweiten Reduktionsreaktor (7) eine zweite Eindüseeinrichtung (15) angeordnet ist.

11. Katalytische Abgasreinigungseinrichtung (1) nach Anspruch 10, **dadurch gekennzeichnet, dass** der erste Reduktionsreaktor (5) Heizflächen (8) umfasst, die zumindest an einem Teil eine erste katalytische Beschichtung (9) aufweisen, wobei die erste katalytische Beschichtung (9) selektiv für Stickoxide NOₓ ist, und bis zu einer Temperatur von 500 °C stabil ist.

12. Katalytische Abgasreinigungseinrichtung (1) nach Anspruch 10 oder 11, **dadurch gekennzeichnet, dass** der Oxidationsreaktor (6) Heizflächen (10) umfasst, die zumindest an einem Teil eine zweite katalytische Beschichtung (11) aufweisen, wobei die zweite katalytische Beschichtung selektiv für Stickoxide NOₓ ist, und bis zu einer Temperatur von 300 °C stabil ist.

13. Katalytische Abgasreinigungseinrichtung (1) nach Anspruch 10 oder 12, **dadurch gekennzeichnet, dass** der zweite Reduktionsreaktor (7) Heizflächen (12) umfasst, die zumindest an einem Teil eine dritte katalytische Beschichtung (13) aufweisen, wobei die dritte katalytische Beschichtung (13) selektiv für Stickoxide NOₓ ist, und bis zu einer Temperatur von 250 °C stabil ist.

14. Katalytische Abgasreinigungseinrichtung (1) nach Anspruch 11 und 13, **dadurch gekennzeichnet, dass** die erste katalytische Beschichtung (9) und die dritte katalytische Beschichtung (13) SCR-Katalysatorschichten sind, die Dicken von größer 10 µm und kleiner 50 µm aufweisen, so dass eine Reduktionsreaktion von Stickoxiden NOₓ mit Ammoniak NH₂ zu Wasser H₂O und Stickstoff N₂ durchführbar ist.

15. Katalytische Abgasreinigungseinrichtung (1) nach Anspruch 12, **dadurch gekennzeichnet, dass** die zweite katalytische Beschichtung (11) eine edelmetallhaltige Beschichtung ist, die eine Dicke von größer 10 µm und kleiner 50 µm aufweist, und deren geometrische Oberfläche kleiner als 30% der geometrischen Oberfläche der ersten katalytischen Beschichtung (9) ist, so dass eine Oxidationsreaktion von Stickstoffmonoxid NO mit Sauerstoff O₂ zu Stickstoffdioxid NO₂ durchführbar ist.

16. Katalytische Abgasreinigungseinrichtung (1) nach einem der Ansprüche 10 bis 15, , wobei die erste Eindüseeinrichtung (14) ein erstes Regelventil (16) aufweist und die zweite Eindüseeinrichtung (15) ein zweites Regelventil (17) aufweist, wobei die Eindüseeinrichtungen (14, 15) jeweils aus einer Anzahl an Düsenöffnungen (18) bestehen, die über die Fläche der Reaktoren (5, 7) verteilt sind, und dass die Düsenöffnungen (18) von den Reaktoren (5, 7) einen Abstand aufweisen, so dass ein Reduktionsmittel (19) über den Strömungsquerschnitt (20) der Reaktoren gleichmäßig verteilt eindüsbar ist.

17. Katalytische Abgasreinigungseinrichtung (1) nach Anspruch 16, **dadurch gekennzeichnet, dass** eine Regeleinrichtung (21) vorgesehen ist, die eine erste Messeinheit (22) und eine zweite Messeinheit (23) umfasst, die mit einer ersten Auswerteeinheit (24) signalleitend verbunden sind, und dass die Regeleinrichtung (21) eine dritte Messeinheit (25) umfasst, die mit einer zweiten Auswerteeinheit (26) signalleitend verbunden ist, und dass die erste Auswerteeinheit (24) mit dem ersten Regelventil (16) signalleitend verbunden ist und die zweite Auswerteeinheit (26) mit dem zweiten Regelventil (17) signalleitend verbunden ist.

18. Katalytische Abgasreinigungseinrichtung (1) nach einem der Ansprüche 11 bis 17, **dadurch gekennzeichnet, dass** die Heizflächen (8, 10, 12) Überhitzerheizflächen, Verdampferheizflächen oder Economizerheizflächen sind.

19. Abhitzedampferzeuger (27) umfassend eine katalytische Abgasreinigungseinrichtung (1) nach einem der Ansprüche 10 bis 18.

## Claims

1. Process for the reduction of nitrogen oxides NOₓ in a nitrogen oxide-containing exhaust gas (AG₁) from a combustion process, wherein
a) the exhaust gas (AG₁) and a reducing agent (R₁) are fed into a first reaction process (K₁), where part of the nitrogen oxides NOₓ present in the exhaust gas is reduced to water H₂O and nitrogen N₂ by selective catalytic reduction at a first reaction temperature (T₁) to form an exhaust gas (AG₂) which has a reduced nitrogen oxide content NOₓ,
b) part of the nitrogen monoxide NO present in the exhaust gas (AG₂) having a reduced nitrogen oxide content NOₓ is oxidized to nitrogen dioxide NO₂ by means of oxygen O₂ at a reaction temperature (T₂) in a second reaction process (K₂) to form an exhaust gas (AG₃) having a ratio (V) of nitrogen monoxide NO to nitrogen dioxide NO₂,
c) the exhaust gas (AG₃) and a reducing agent (R₂) are fed into a third reaction process (K₃), where nitrogen monoxide NO and nitrogen dioxide NO₂ are reduced to water H₂O and nitrogen N₂ by means of the reducing agent (R₂) at a reaction temperature (T₃) by means of fast selective catalytic reduction to form an exhaust gas (AG₄) which has been essentially freed of nitrogen oxides NOₓ.

2. Process according to Claim 1, wherein the reaction temperature (T₁) is set in the range from 250°C to 450°C, the reaction temperature (T₃) is set in the range from 80°C to 250°C and the reaction temperature (T₂) is set to a value between (T₁) and (T₂).

3. Process according to Claim 1 or 2, wherein the reducing agent (R₁) introduced into the exhaust gas (AG₁) is introduced via a first regulating process (28) so that, on average over time, complete conversion of the reducing agent (R₁) is achieved in the first catalysis process (K₁).

4. Process according to Claim 3, wherein, in the first regulating process (28),
a) the exhaust gas mass flow (Q_{Ag1}), the nitrogen monoxide NO concentration (C₁) and the exhaust gas temperature (T₄) are measured in a first measurement procedure (P₁) upstream of the first catalysis process (K₁) and an expected concentration (C₂) of nitrogen monoxide NO after the first catalysis process (K₁) is determined as a function of temperature, loading of ammonia NH₃ in the first catalysis process (K₁) and the nitrogen monoxide NO concentration (C₁) in a first evaluation and control process (30) with the aid of characteristic data for the nitrogen monoxide reduction,
b) the nitrogen monoxide NO concentration (C₃) is measured in a second measurement procedure (P₂) between the first catalysis process (K₁) and the second catalysis process (K₂),
c) the calculated concentration (C₂) is compared with the measured concentration (C₃) and the amount of the first reducing agent (R₁) introduced is reduced by means of a first control process (31) as soon as the calculated concentration (C₂) becomes lower than the measured concentration (C₃).

5. Process according to any of Claims 1 to 4, wherein the second catalysis process (K₂) is controlled in such a way that a largely balanced ratio V of nitrogen monoxide NO to nitrogen dioxide NO₂ of about 1 is achieved.

6. Process according to any of Claims 1 to 5, wherein the second reducing agent (R₂) which is introduced into the exhaust gas (AG₃) is introduced via a second regulating process (29) so that, on average over time, complete conversion of the reducing agent R₂ is achieved in the third catalysis process (K₃).

7. Process according to Claim 6, wherein, in the second regulating process (29)
a) the exhaust gas temperature (T₅) and the exhaust gas mass flow (Q_{Ag2}) are measured in the second measurement procedure (P₂) before the second catalysis process (K₂) and the concentration (C₄) of nitrogen dioxide NO₂ and a degree of reduction (G) which can be achieved in the catalysis process (K₃) is determined in a second evaluation and regulating process (32) on the basis of characteristic data for the catalysis process (K₂),
b) the exhaust gas temperature (T₅) and the nitrogen dioxide NO₂ concentration (C₅) is measured in a third measurement procedure (P₃) after the third catalysis process (K₃),
c) the calculated concentration (C₄) is compared with the measured concentration (C₅) and the amount of the second reducing agent (R₂) introduced is set by means of a second control process (33) on the basis of the achievable degree of reduction (G) and is reduced as soon as the calculated concentration (C₄) becomes smaller than the measured concentration (C₅).

8. Process according to any of Claims 1 to 7, wherein ammonia NH₃ or an ammonia-releasing substance is used as reducing agent (R₁, R₂).

9. Process according to any of the preceding claims, **characterized by** use in a fossil fuel-fired power station.

10. Catalytic exhaust gas purification apparatus (1) for the reduction of nitrogen oxides in an exhaust gas (2) from a fossil fuel-fired power station, having a heating gas channel (3) extending along a flow direction (34) and a reactor space (4) arranged in the heating gas channel (3), **characterized in that** the reactor space (4) comprises a first reduction reactor (5) for the reduction of nitrogen oxides NOₓ to water H₂O and nitrogen N₂, where a first injection device (14) is arranged upstream of the first reduction reactor (5), an oxidation reactor (6) for the oxidation of nitrogen monoxide NO to nitrogen dioxide NO₂ located downstream of the first reduction reactor (5) and a second reduction reactor (7) for the reduction of nitrogen oxides NOₓ to water H₂O and nitrogen N₂ located downstream of the oxidation reactor (6), wherein a second injection device (15) is arranged upstream of the second reduction reactor (7).

11. Catalytic exhaust gas purification apparatus (1) according to Claim 10, **characterized in that** the first reduction reactor (5) comprises heating surfaces (8) which on at least part of them have a first catalytic coating (9), where the first catalytic coating (9) is selective for nitrogen oxides NOₓ and is stable up to a temperature of 500°C.

12. Catalytic exhaust gas purification apparatus (1) according to Claim 10 or 11, **characterized in that** the oxidation reactor (6) comprises heating surfaces (10) which on at least part of them have a second catalytic coating (11), where the second catalytic coating is selective for nitrogen oxides NOₓ and is stable up to a temperature of 300°C.

13. Catalytic exhaust gas purification apparatus (1) according to Claim 10 or 12, **characterized in that** the second reduction reactor (7) comprises heating surfaces (12) which on at least part of them have a third catalytic coating (13), where the third catalytic coating (13) is selective for nitrogen oxides NOₓ and is stable up to a temperature of 250°C.

14. Catalytic exhaust gas purification apparatus (1) according to Claims 11 and 13, **characterized in that** the first catalytic coating (9) and the third catalytic coating (13) are SCR catalyst layers which have thicknesses of greater than 10 µm and less than 50 µm so that a reduction reaction of nitrogen oxides NOₓ with ammonia NH₃ to form water H₂O and nitrogen N₂ can be carried out.

15. Catalytic exhaust gas purification apparatus (1) according to Claim 12, **characterized in that** the second catalytic coating (11) is a noble metal-containing coating which has a thickness of greater than 10 µm and less than 50 µm and whose geometric surface area is less than 30% of the geometric surface area of the first catalytic coating (9) so that an oxidation reaction of nitrogen monoxide NO with oxygen O₂ to form nitrogen dioxide NO₂ can be carried out.

16. Catalytic exhaust gas purification apparatus (1) according to any of Claims 10 to 15, wherein the first injection device (14) has a first regulating valve (16) and the second injection device (15) has a second regulating valve (17) and the injection devices (14, 15) each consist of a number of nozzle openings (18) which are distributed over the area of the reactors (5, 7) and the nozzle openings (18) have a spacing from the reactors (5, 7) so that a reducing agent (19) can be injected uniformly distributed over the flow cross section (20) of the reactors.

17. Catalytic exhaust gas purification apparatus (1) according to Claim 16, **characterized in that** a regulating device (21) which comprises a first measurement unit (22) and a second measurement unit (23) which are connected in a signal-transmitting manner to a first evaluation unit (24) is provided and the regulating device (21) comprises a third measurement unit (25) which is connected in a signal-transmitting manner to a second evaluation unit (26) and the first evaluation unit (24) is connected in a signal-transmitting manner to the first regulating valve (16) and
the second evaluation unit (26) is connected in a signal-transmitting manner to the second regulating valve (17).

18. Catalytic exhaust gas purification apparatus (1) according to any of Claims 11 to 17, **characterized in that** the heating surfaces (8, 10, 12) are superheater heating surfaces, vaporizer heating surfaces or economizer heating surfaces.

19. Waste heat steam generator (27) comprising a catalytic exhaust gas purification apparatus (1) according to any of Claims 10 to 18.

## Revendications

1. Procédé pour réduire les oxydes d'azote NOₓ de gaz brûlés (AG₁) contenant des oxydes d'azote d'un processus de combustion, dans lequel
a) on envoie les gaz brûlés (AG₁) et un agent (R) réducteur dans un premier processus (K₁) de réaction, en réduisant à une température (T) de réaction une partie des oxydes d'azote NOₓ contenue dans les gaz brûlés en eau H₂O et en azote N₂ par réduction catalytique sélective, des gaz brûlés (AG₂) à teneur en oxydes d'azote NOₓ réduite étant formés,
b) on oxyde dans un deuxième processus (K₂) de réaction de gaz brûlés (AG₂) à teneur en oxydes d'azote NOₓ réduite à une température (T₂) de réaction une partie du monoxyde d'azote NO contenu par de l'oxygène O₂ en dioxyde d'azote NO₂, en formant des gaz brûlés (AG) ayant un rapport (V) du monoxyde d'azote NO au dioxyde d'azote NO₂,
c) on envoie dans un troisième processus (K₃) de réaction les gaz brûlés (AG₃) et un agent (R₂) réducteur, en réduisant à une température (T₃) de réaction, par réduction catalytique sélective rapide, du monoxyde d'azote NO et du dioxyde d'azote NO₂ par l'agent (R₂) réducteur en eau H₂O et en azote N₂, des gaz brûlés (AG₄) essentiellement débarrassés d'oxyde d'azote NOₓ étant formés.

2. Procédé suivant la revendication 1, dans lequel on règle la température (T₁) de réaction à une température comprise entre 250°C et 450°C, on règle la température (T₃) de réaction à une température comprise entre 80°C et 250°C et on règle la température (T₂) de réaction à une température comprise entre T₁ et T₂.

3. Procédé suivant la revendication 1 ou 2, dans lequel on ajoute de manière dosée l'agent (R) réducteur envoyé aux gaz brûlés (AG₁) par un premier processus (28) de réglage de manière à obtenir dans le premier processus (K₁) de catalyse en moyenne dans le temps une conversion complète de l'agent (R₁) réducteur.

4. Procédé suivant la revendication 3, dans lequel, dans le premier processus (28) de réglage
a) on détecte dans une première opération (P₁) de mesure, avant le premier processus (K₁) de catalyse, le courant (Q_{AG1}) massique de gaz brûlés, la concentration (C₁) de monoxyde d'azote NO et la température (T₄) des gaz brûlés et, à l'aide d'une courbe caractéristique de réduction du monoxyde d'azote, on détermine dans un premier processus (30) d'exploitation et de commande, en fonction de la température, d'une charge en ammoniac NH₃ du premier processus (K₁) de catalyse et de la concentration (C) de monoxyde d'azote NO, une concentration (C₂) escomptée de monoxyde d'azote NO après le premier processus (K₁) de catalyse,
b) dans une deuxième opération (P₂) de mesure, entre le premier processus (K₁) de catalyse et le deuxième processus (K₂) de catalyse, on détecte la concentration (C₃) de monoxyde d'azote NO,
c) on compare la concentration (C₂) calculée à la concentration (C₃) mesurée et on diminue par un premier processus (31) de commande l'envoi du premier agent (R₁) réducteur dès que la concentration (C₂) calculée est plus petite que la concentration (C₃) mesurée.

5. Procédé suivant l'une des revendications 1 à 4, dans lequel on règle le deuxième processus (K₂) de catalyse de manière à obtenir un rapport V ∼ 1 compensé dans une grande mesure du monoxyde d'azote NO au dioxyde d'azote NO₂.

6. Procédé suivant l'une des revendications 1 à 5, dans lequel on ajoute de manière dosée par un deuxième processus (29) de réglage le deuxième agent (R₂) réducteur envoyé aux gaz brûlés (AG₃) de manière à obtenir dans le troisième processus (K₃) de catalyse en moyenne dans le temps une conversion complète de l'agent (R₂) réducteur.

7. Procédé suivant la revendication 6, dans lequel, dans le deuxième processus (29) de réglage
a) on détecte dans la deuxième opération (P₂) de mesure avant le deuxième processus (K₂) de catalyse, la température (T₅) des gaz brûlés et, le courant (Q_{AG2}) massique des gaz brûlés et, à l'aide d'une courbe caractéristique du processus (K₂) de catalyse, on détermine dans un deuxième processus (32) d'exploitation et de réglage la concentration (C₄) de dioxyde d'azote NO₂ et un degré (G) de réduction pouvant être atteint dans le processus (K₃) de catalyse,
b) dans une troisième opération (P₃) de mesure après le troisième processus (K₃) de catalyse, on détecte la température (T₅) des gaz brûlés et la concentration (C₅) de dioxyde d'azote NO₂,
c) on compare la concentration (C₄) calculée à la concentration (C₅) mesurée et on règle l'envoi du deuxième agent (R₂) réducteur par un deuxième processus (33) de réglage à l'aide du degré de réduction pouvant être obtenu et on le diminue dès que la concentration (C₄) calculée est plus petite que la concentration (C₅) mesurée.

8. Procédé suivant l'une des revendications 1 à 7, dans lequel on utilise comme agent (R₁, R₂) réducteur l'ammoniac NH₃ ou une substance dégageant de l'ammoniac.

9. Procédé suivant l'une des revendications précédentes, **caractérisé par** une application dans une centrale électrique alimentée en combustible fossile.

10. Dispositif (1) catalytique d'épuration de gaz brûlés pour réduire les oxydes d'azote de gaz brûlés (2) d'une centrale électrique alimentée en combustible fossile, comprenant un canal (3) pour du gaz chaud s'étendant suivant un sens (34) d'écoulement et un espace (4) formant réacteur disposé dans le canal (3) pour du gaz chaud, **caractérisé en ce que** l'espace (4) formant réacteur comprend un premier réacteur (5) de réduction pour réduire des oxydes d'azote NOₓ en eau H₂O et en azote N₂,
il est disposé avant le premier réacteur (5) un premier dispositif (14) de pulvérisation, un réacteur (6) d'oxydation monté en aval dans le sens d'écoulement du premier réacteur (5) de réduction pour oxyder du monoxyde d'azote NO en dioxyde d'azote NO₂ et un deuxième réacteur (7) de réduction monté en aval, dans le sens d'écoulement, du réacteur (6) d'oxydation pour réduire des oxydes d'azote NOₓ en eau H₂O et en azote N₂, un deuxième dispositif (15) de pulvérisation étant disposé avant le deuxième réacteur (7) de réduction.

11. Dispositif (1) catalytique d'épuration de gaz brûlés suivant la revendication 10, **caractérisé en ce que** le premier réacteur (5) de réduction comprend des surfaces (8) de chauffe, qui ont sur au moins une partie un premier revêtement (9) catalytique, le premier revêtement (9) catalytique étant sélectif pour des oxydes d'azote NOₓ et étant stable jusqu'à une température de 500°C.

12. Dispositif (1) catalytique d'épuration de gaz brûlés suivant la revendication 10 ou 11, **caractérisé en ce que** le réacteur (6) d'oxydation comprend des surfaces (10) de chauffe, qui ont au moins sur une partie un deuxième revêtement (11) catalytique, le deuxième revêtement catalytique étant sélectif pour des oxydes d'azote NOₓ et étant stable jusqu'à une température de 300°C.

13. Dispositif (1) catalytique d'épuration de gaz brûlés suivant la revendication 10 ou 12, **caractérisé en ce que** le deuxième réacteur (7) de réduction comprend des surfaces (12) de chauffe, qui ont au moins sur une partie un troisième revêtement (13) catalytique, le troisième revêtement (13) catalytique étant sélectif pour des oxydes d'azote NOₓ et étant stable jusqu'à une température de 250°C.

14. Dispositif (1) catalytique d'épuration de gaz brûlés suivant la revendication 11 et 13, **caractérisé en ce que** le premier revêtement (9) catalytique et le troisième revêtement (13) catalytique sont des couches de catalyseur SCR, qui ont des épaisseurs plus grandes que 10 µm et plus petites que 50 µm, de manière à pouvoir effectuer une réaction de réduction d'oxydes d'azote NOₓ par de l'ammoniac NH₂ en eau H₂O et en azote N₂.

15. Dispositif (1) catalytique d'épuration de gaz brûlés suivant la revendication 12, **caractérisé en ce que** le deuxième revêtement (11) catalytique est un revêtement contenant un métal précieux, qui a une épaisseur plus grande que 10 µm et plus petite que 50 µm et dont la surface géométrique représente moins de 30 % de la surface géométrique du premier revêtement (9) catalytique, de manière à pouvoir effectuer une réaction d'oxydation du monoxyde d'azote NO en le dioxyde d'azote NO₂ par de l'oxygène O₂.

16. Dispositif (1) catalytique d'épuration de gaz brûlés suivant l'une des revendications 10 à 15, dans lequel le premier dispositif (14) de pulvérisation a une première vanne (16) de réglage et le deuxième dispositif (15) de pulvérisation a une deuxième vanne (17) de réglage, les dispositifs (14, 15) de pulvérisation étant constitués respectivement d'un certain nombre d'ouvertures (18) formant buses qui sont réparties sur la surface des réacteurs (5, 7) et en ce que les ouvertures (18) formant buses sont à distance des réacteurs (5, 7) de sorte qu'un agent (19) réducteur peut être pulvérisé d'une manière répartie uniformément sur la section (20) transversale d'écoulement des réacteurs.

17. Dispositif (1) catalytique d'épuration de gaz brûlés suivant la revendication 16, **caractérisé en ce qu'**il est prévu un dispositif (21) de réglage, qui comprend une première unité (22) de mesure et une deuxième unité (23) de mesure, qui sont reliées, de manière à conduire un signal, à une première unité (24) d'exploitation et **en ce que** le dispositif (21) de réglage comprend une troisième unité (25) de mesure, qui est reliée, de manière à conduire un signal, à une deuxième unité (26) d'exploitation et **en ce que** la première unité (24) d'exploitation est reliée, de manière à conduire un signal, à la première vanne (16) de réglage et la deuxième unité (26) d'exploitation est reliée de manière à conduire un signal, à la deuxième vanne (17) de réglage.

18. Dispositif (1) catalytique d'épuration de gaz brûlés suivant l'une des revendications 11 à 17, **caractérisé en ce que** les surfaces (8, 10, 12) de chauffe sont des surfaces de chauffe de surchauffeur, des surfaces de chauffe d'évaporateur ou des surfaces de chauffe d'économiseur.

19. Générateur (27) de vapeur à récupération de la chaleur perdue comprenant un dispositif (11) catalytique d'épuration de gaz brûlés suivant l'une des revendications 10 à 18.
